# EUROPÄISCHE PATENTSCHRIFT

(11) **EP 2 771 144 B1**
(45) Veröffentlichungstag und Bekanntmachung des Hinweises auf die Patenterteilung: **28.12.2016**
(21) Anmeldenummer: 12769644.1
(22) Anmeldetag: 02.10.2012
(51) Int. Cl.: B23D 25/12

(54) **TROMMELSCHERE**
DRUM SHEAR
CISAILLE À TAMBOUR

(30) Priorität: 25.10.2011 AT 15602011
(43) Veröffentlichungstag der Anmeldung: 03.09.2014
(73) Patentinhaber: Primetals Technologies Austria GmbH, 4031 Linz (AT)
(72) Erfinder: HOHENBICHLER, Gerald, A-4484 Kronstorf (AT); LEHNER, Christian, A-4040 Gramastetten (AT); PEITL, Wolfgang, A-4490 St. Florian (AT); ZAHEDI, Michael, A-4502 St.Marien (AT)
(74) Vertreter: Metals@Linz
(86) Internationale Anmeldenummer: PCT/EP2012/069429
(87) Internationale Veröffentlichungsnummer: WO 2013/060554

(56) Entgegenhaltungen:
- DE-A1- 2 456 431
- DE-A1- 2 623 518
- JP-U- 50 113 983

## Beschreibung

### Technisches Gebiet

Die Erfindung betrifft eine Trommelschere zum Querteilen von Walzgut, z.B. von Kalt- oder Warmwalzgut, das als Flach- oder Langprodukt ausgebildet sein kann, umfassend:
- zwei gegenüberliegend angeordneten Trommeln, welche mittels einer Antriebsvorrichtung mit einer der Walzgut-Durchlaufgeschwindigkeit entsprechenden Umfangsgeschwindigkeit antreibbar sind,
- wobei jede dieser Trommeln einen ersten Teil, der um eine Drehachse drehbar gelagert ist, und einen zweiten Teil, der ein Messer trägt, aufweist, und
- wobei zwischen dem ersten Teil und dem zweiten Teil eine Führung ausgebildet ist, sodass der zweite Teil mittels einer Betätigungseinrichtung zwischen einer Ausgangsposition und einer Schnittposition gleitbeweglich verstellbar ist.

Außerdem betrifft die Erfindung ein Verfahren zum Querteilen von Walzgut mittels einer Trommelschere, wobei die Trommelschere zwei Trommeln und jede Trommel zumindest ein Messer umfasst, wobei das Messer von einem ersten Hydraulikzylinder und einem zweiten Hydraulikzylinder verschoben werden kann.

Schließlich betrifft die Erfindung die Verwendung der erfindungsgemäßen Trommelschere zur Durchführung des erfindungsgemäßen Verfahrens.

### Stand der Technik

In der Walzwerktechnik werden zum Querteilen von Walzgut so genannte Trommelscheren eingesetzt, welche im Wesentlichen aus zwei Trommeln bestehen, deren Messer zum Schnitt zusammengeführt werden. JP 50 113983U beschreibt zum Beispiel eine Trommelschere mit den Merkmalen des Oberbegriffes des Anspruchs 1. Derartige Zweitrommelscheren können beispielsweise als Hochlaufscheren betrieben werden, d.h. dass die Messertrommeln aus dem Stillstand während weniger als einer Trommelumdrehung auf Walzgut-Durchlaufgeschwindigkeit beschleunigt und die Messer in Schnittposition gebracht werden. Nach dem Querteilen werden die Trommeln wieder verzögert. Dabei ist von Nachteil, dass mit zunehmender Durchlaufgeschwindigkeit des Walzgutes sehr hohe Antriebsleistungen für den Beschleunigungsvorgang erforderlich sind.

Um schnell laufende Stahlbänder trennen zu können, sind daher Zweitrommelscheren bekannt, deren Messertrommeln nicht bei jedem Schnitt hochlaufen, sondern so angetrieben werden, dass die Messerkreis-Umfangsgeschwindigkeit der Trommeln der Geschwindigkeit des Walzguts entweder ständig entspricht oder dass die Messertrommeln innerhalb mehrerer Umdrehungen auf Bandgeschwindigkeit gebracht werden. Eine typische Ausführungsform ist beispielsweise in der DE 195 42 173 C2 offenbart. Kurz vor dem gewünschten Schnittzeitpunkt werden die Messer mittels einer Betätigungsvorrichtung, z.B. einer Zug- und Druckstange, ausgefahren. Nachteilig daran ist, dass das Messer während einer Umdrehung der Trommel von der eingefahrenen Ausgangsposition in die ausgefahrene Schnittposition gebracht werden muss, was bei hohen Geschwindigkeiten des Walzguts sehr hohe Ausfahrgeschwindigkeiten des Messers erfordert. Weiters ist die Betätigungseinrichtung komplex, störungsanfällig und wenig robust.

Heutzutage werden in der Warmwalzwerktechnik zunehmend dünner werdende Stahlbänder verarbeitet, deren Dicke häufig kleiner als 1 mm ist. Die Bandgeschwindigkeit kann bis zu 20 m/s und mehr betragen. Um ein dünnes, schnell bewegtes Metallband schneiden zu können, ergeben sich hohe Anforderungen an die Schere. Wegen des engen Messerspalts müssen die Messer trotz der schnellen Bewegung dennoch exakt synchron zueinander bewegt werden. Außerdem soll diese Präzision über eine möglichst lange Betriebsdauer erhalten werden können. Laufen die Messer asynchron oder ändert sich der Messerspalt, beispielsweise aufgrund von mechanischen Toleranzen und/oder Verschleiß, so kann es zu Betriebsstörungen bis hin zur Beschädigung der Messer bzw. der Trommelschere kommen. Bekannte Trommelscheren stoßen hinsichtlich der komplizierten Bauform der Betätigungseinrichtung zunehmend an ihre Grenzen, wenn sehr dünne und sehr schnell bewegte Stahlbänder zuverlässig getrennt werden sollen.

### Darstellung der Erfindung

Der Erfindung liegt die Aufgabe zu Grunde, eine Trommelschere und ein Verfahren zum Querteilen von Walzgut mittels einer Trommelschere anzugeben, mit denen die Messer der Trommelschere sehr rasch und zuverlässig in die Schnittposition gebracht werden können. Die Trommelschere soll außerdem einfach und robust konstruiert sein.

Die Lösung dieser Aufgabe erfolgt durch eine Trommelschere nach Anspruch 1, wobei die Betätigungseinrichtung einen ersten Hydraulikzylinder und einen zweiten Hydraulikzylinder umfasst, wobei der erste Hydraulikzylinder zwischen dem ersten Teil und dem zweiten Hydraulikzylinder und der zweite Hydraulikzylinder zwischen dem ersten Hydraulikzylinder und dem zweiten Teil angeordnet ist.

Vorteilhafte Ausgestaltungen der Erfindung sind in den abhängigen Ansprüchen angegeben.

Durch die Ausführung der Betätigungseinrichtung als zwei, hintereinander angeordnete, Hydraulikzylinder ist es zuverlässig und rasch möglich, das Messer der Trommelschere in Schnittposition zu bringen. In einem ersten Schritt, der typischerweise innerhalb mehrerer Umdrehungen der Trommel abläuft, wird das Messer durch den ersten Hydraulikzylinder von einer eingezogenen Ausgangsposition in eine Voranstellungs-Position, die zwischen der Ausgangsposition und der Schnittposition liegt, gebracht. Der erste Hydraulikzylinder ist dabei mit dem ersten Teil der Trommel verbunden. Kurz vor dem eigentlichen Schnitt wird in einem zweiten Schritt das Messer sehr rasch, d.h. innerhalb von weniger als 1 Trommelumdrehung, durch den zweiten Hydraulikzylinder von der Voranstellungs-Position in die Schnittposition ausgefahren, wobei das Querteilen des Walzguts bei ausgefahrenen Messern erfolgt. Der zweite Hydraulikzylinder ist dabei mit dem ersten Hydraulikzylinder verbunden. Bei der erfindungsgemäßen Anordnung des ersten und zweiten Hydraulikzylinders werden die Hydraulikzylinder i.A. in radialer Richtung hintereinander angeordnet, wobei der erste Hydraulikzylinder mit dem ersten Teil und der zweite Hydraulikzylinder mit dem zweiten Teil verbunden ist. Prinzipiell wären zwar auch nicht radiale Anordnungen der Hydraulikzylinder denkbar, allerdings würde eine solche Anordnung den Verfahrweg der Hydraulikzylinder vergrößern. Die ersten und zweiten Hydraulikzylinder können einfachwirkend (z.B. als Plungerzylinder) oder doppeltwirkend (z.B. Differential- oder Gleichgangzylinder) ausgebildet sein. Vorteilhaft an dem einfachwirkenden Hydraulikzylinder ist dessen einfache Bauform; vorteilhaft an dem doppeltwirkenden Hydraulikzylinder ist, dass der Zylinder, der Messerhalter und das Messer in beide Richtungen verfahren, d.h. ein- und ausgefahren, werden können. Außerdem kann ein hydraulischer Druck in gegenüberliegende Kammern des Hydraulikzylinders eingespannt werden, sodass die Steifigkeit des Antriebs erhöht werden kann. Hydraulikzylinder sind sehr zuverlässige Konstruktionselemente, die nur geringem Verschleiß unterworfen sind. Der Verfahrweg zwischen der Voranstellungs-Position und der Schnittposition beträgt ca. 3 bis 33% des Verfahrwegs zwischen der Ausgangsposition und der Voranstellungs-Position. Dadurch kann das Messer sehr rasch in die Schnittposition gebracht werden.

Um die Kompaktheit der Trommelschere zu erhöhen, ist es vorteilhaft, den ersten Hydraulikzylinder als einen mehrstufigen Hydraulikzylinder (einen sogenannten Teleskopzylinder mit zumindest zwei Stufen) auszubilden. Typischerweise reicht es aber aus, den ersten Hydraulikzylinder als einen einstufigen Hydraulikzylinder auszuführen. Prinzipiell ist es natürlich ebenfalls möglich, den zweiten Hydraulikzylinder als ein- oder mehrstufigen Hydraulikzylinder auszuführen. Dabei können die beiden hintereinander angeordneten Hydraulikzylinder eine sogenannte Doppelkolben-Anordnung aufweisen, wobei durch eine erste Ansteuerleitung ein erster Kolben von der Ausgangsposition in die Voranstellungs-Position verschiebbar ist. Durch eine zweite Ansteuerleitung ist der zweite Kolben von der Voranstellungs-Position in die Schnittposition verschiebbar. Natürlich ist es aber auch möglich, zwei separate Hydraulikzylinder bzgl. des Verfahrweges in Serie anzuordnen.

Eine einfache Konstruktion der Betätigungseinrichtung ist möglich, wenn der erste Teil der Trommel zumindest ein Zylinderrohr, bevorzugt zwei Zylinderrohre, der beiden Hydraulikzylinder ausbildet. Dadurch wird die Anzahl der Bauteile reduziert.

Für eine hochgenaue Positionierung der Messer ist es vorteilhaft, wenn der erste Hydraulikzylinder einen ersten Endanschlag zur Festlegung einer Voranstellungs-Position aufweist, wobei die Voranstellungs-Position zwischen der Ausgangsposition und der Schnittposition liegt, und der zweite Hydraulikzylinder einen zweiten Endanschlag zur Festlegung der Schnittposition aufweist. Dadurch werden die Endlagen der beiden Hydraulikzylinder mechanisch festgelegt, wodurch auch die Lagen der Voranstellungs-Position und der Schnittposition festgelegt werden. Natürlich ist es aber keinesfalls zwingend, dass der erste und der zweite Hydraulikzylinder je einen mechanischen Endanschlag aufweisen; vielmehr ist es denkbar, dass z.B. nur der zweite Hydraulikzylinders einen mechanischen Anschlag zur Festlegung der Schnittposition aufweist.

Die Position zumindest eines Endanschlags kann fix oder verstellbar sein, z.B. durch ein Gewinde, wodurch der Endanschlag gegenüber dem Hydraulikzylinder axial verschoben werden kann.

Zur Festlegung einer definierten Ausgangsposition ist es vorteilhaft, dass ein Federelement zwischen dem ersten und dem zweiten Teil angeordnet ist. Damit kann sichergestellt werden, dass im Falle eines Druckabfalls im Hydrauliksystem das Messer selbsttätig in die Ausgangsposition zurückgezogen wird. Damit wird aber auch sichergestellt, dass der Messerhalter, der durch einen Plungerzylinder an das Walzgut angestellt wird, selbsttätig in die Ausgangsposition zurückgezogen wird.

Für ein schnelles Ausfahren bzw. Einfahren der Messer ist es vorteilhaft, wenn die Antriebsvorrichtung über eine Antriebswelle mit einer Trommel verbunden ist, und eine Druckquelle mit einer Drehdurchführung, die Drehdurchführung mit der Antriebswelle, die Antriebswelle mit einem Hydraulikventil, das auf der Trommel angeordnet ist, und das Hydraulikventil mit einem Hydraulikzylinder strömungstechnisch verbunden ist. Somit wird der Abstand zwischen dem Hydraulikventil und dem Hydraulikzylinder reduziert, wodurch der Druck zum Betätigen der Betätigungseinrichtung rascher auf- bzw. abgebaut werden kann.

Ein besonders schneller Druckaufbau ist möglich, wenn ein Hydraulikventil direkt am Hydraulikzylinder (oder zumindest in unmittelbarer Nähe des Zylinders) angeordnet ist.

Alternativ ist die Antriebsvorrichtung über eine Antriebswelle mit einer Trommel verbunden, und ein Hydraulikventil mit einer Drehdurchführung, die Drehdurchführung mit der Antriebswelle, und die Antriebswelle mit einem Hydraulikzylinder strömungstechnisch verbunden ist. Im Gegensatz zur vorgenannten Ausführungsform steht das Hydraulikventil still, sodass das Druckmedium aber auch die Steuersignale einfach dem Hydraulikventil zugeführt werden können. Eine besonders kompakte Anordnung kann erzielt werden, wenn die Dreheinführung auf der Seite, die der Antriebsseite der Trommel gegenüberliegt, angeordnet ist.

Da der hydraulische Druck beim Schneiden eines Walzguts, typischerweise auf das 1,2-fache bis 2,5-fache des Ansteuerdrucks (typischerweise > 125 bar, bevorzugt > 160 bar), ansteigt, ist es vorteilhaft, wenn zwischen dem Hydraulikventil und zumindest einem Hydraulikzylinder eine, vorzugsweise entsperrbare, Sperreinrichtung, insbesondere mit einem Kugel- oder Ventilsitz, angeordnet ist. Hierbei kann die Sperreinrichtung z.B. in das Hydraulikventil integriert oder in die Leitung zwischen dem Ventil und der Betätigungseinrichtung eingebaut werden. Dadurch wird eine Leckage aus einem Hydraulikzylinder bzw. einem -ventil zuverlässig vermieden.

Insbesondere bei der Anordnung des Hydraulikventils auf der Trommel ist es vorteilhaft, wenn eine Steuer- bzw. Regeleinrichtung über eine drahtlose Signalübertragungseinrichtung (z.B. eine Funkstrecke oder eine optische Verbindung) mit dem Hydraulikventil verbunden ist. Alternativ dazu können Steuersignale aber natürlich auch über eine drahtgebundene Übertragungseinrichtung (z.B. über Schleifringe im Bereich der Drehdurchführung), von der Steuer- bzw. Regeleinrichtung auf die Antriebswelle, und von dort zum Hydraulikventil übertragen werden. Für die Überwachung der Trommelschere ist es vorteilhaft, wenn Drücke, Ventilstellungen, Positionen der Trommel etc. zu einer Überwachungseinrichtung übertragen werden.

Die erfindungsgemäße Aufgabe wird ebenfalls durch ein Verfahren zum Querteilen von Walzgut mittels einer Trommelschere nach Anspruch 10 gelöst, wobei die Trommelschere zwei Trommeln und jede Trommel zumindest ein Messer umfasst, wobei das Messer von einem ersten Hydraulikzylinder und einem zweiten Hydraulikzylinder verschoben werden kann, umfassend folgende Verfahrensschritte:
- Voranstellen der Messer mittels des ersten Hydraulikzylinders von einer Ausgangsposition in eine Voranstellungs-Position, wobei die Voranstellungs-Position zwischen der Ausgangsposition und der Schnittposition liegt und das Voranstellen innerhalb von 2 bis 100, bevorzugt 3 bis 20, Umdrehungen der Trommel erfolgt;
- Gegenläufiges Rotieren der Trommeln, wobei die Umfangsgeschwindigkeit der Trommeln der Durchlaufgeschwindigkeit des Walzguts entspricht;
- Ausfahren der Messer mittels des zweiten Hydraulikzylinders von der Voranstellungs-Position in die Schnittposition, wobei das Ausfahren innerhalb von < 1 Umdrehung der Trommel erfolgt; und
- Querteilen des Walzguts.

Vorteilhafte Ausführungsformen sind Gegenstand der abhängigen Ansprüche.

Beim gegenläufigen Rotieren der Trommeln, werden die Trommeln im Wesentlichen mit der Umfangsgeschwindigkeit des durchlaufenden Walzguts rotiert, wobei eine geringe Voreilung (z.B. +0.5%) zulässig ist. Durch das mehrstufige Ausfahren bzw. Einfahren des Messers ist es einerseits möglich, den Großteil des Anstellweges von der Ausgangsposition zur Voranstell-Position (z.B. 50 mm) durch den ersten Hydraulikzylinder relativ langsam, z.B. innerhalb von 2 bis 100, bevorzugt 3 bis 20, Umdrehungen der Trommel, und andererseits den relativ kurzen Anstellweg von der Voranstell-Position zur Schnittposition (z.B. 5 bis 10 mm) durch den zweiten Hydraulikzylinder relativ schnell, d.h. innerhalb von weniger als 1 Umdrehungen der Trommel, zu verfahren. Dadurch wird der maximale Volumenstrom pro Hydraulikzylinder klein gehalten (z.B. auf kleiner 450 l/min bei einer einzigen Betätigungsvorrichtung pro Messer, bzw. auf < 260 l/min bei zwei Betätigungsvorrichtungen pro Messer), wodurch die Hydraulikleitungen, die Drehdurchführungen, das Hydraulikventil aber auch die Druckversorgung klein gehalten werden können. In der Voranstell-Position berühren die Messer der Trommel das Walzgut nicht, sondern weisen einen geringen Abstand zum Walzgut auf. Somit kann aber das Voranstellen der Messer entweder bei konstanter Umlaufgeschwindigkeit der Trommeln, d.h. *v_{Trommel}* = Durchlaufgeschwindigkeit des Walzguts *v_{Walzgut},* oder während des Beschleunigens der Trommeln auf *v_{Walzgut}* erfolgen. Nach dem Querteilen, d.h. dem Schneiden, des Walzguts, werden die Messer innerhalb von < 1 Umdrehung der Trommel von der Schnittposition zumindest in die Voranstellungs-Position eingefahren, sodass die Messer der Trommel das Walzgut nicht mehr berühren.

Um das mehrmalige Schneiden eines langen, z.B. auch endlos produzierten, Walzguts zu ermöglichen, ist es vorteilhaft, wenn nach dem Querteilen des Walzguts die Schritte
- Einfahren der Messer von der Schnittposition in die Voranstellungs-Position, wobei das Einfahren innerhalb von < 1 Umdrehung der Trommel erfolgt; und bevorzugt
- Einfahren der Messer von der Voranstellungs-Position in die Ausgangsposition;
durchgeführt werden.
Nach Durchführung diese Verfahrensschritte liegen die Messer wiederum in der Ausgangsposition vor. Das Einfahren kann entweder durch einen Hydraulikzylinder erfolgen oder z.B. durch das Federelement zwischen dem ersten und zweiten Teil der Trommel.

Um die Voranstellungs-Position möglichst einfach, ohne zusätzlichen Regelaufwand, und genau festlegen zu können, ist es vorteilhaft, dass beim Voranstellen der erste Hydraulikzylinder gegen einen ersten Endanschlag ausgefahren wird.

Um auch die Schnittposition möglichst einfach (z.B. ohne zusätzlichen Regelaufwand) und genau festlegen zu können, ist es vorteilhaft, dass beim Anstellen der zweite Hydraulikzylinder gegen einen zweiten Endanschlag ausgefahren wird.

Besonders günstig ist es, die Trommelschere nach einem der Ansprüche 1 bis 9 zur Durchführung des Verfahrens nach einem der Ansprüche 10 bis 13 zu verwenden.

### Kurzbeschreibung der Zeichnungen

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die Folgendes zeigen:
Fig 1 eine Vorderansicht einer Trommelschere, wobei die Obertrommel und die Untertrommel in einem Schnitt gezeigt sind;
Fig 2 eine Rückansicht der Trommelschere nach Fig 1, gesehen von schräg oben;
Fig 3 eine schematische Darstellung der Trommelschere;
Fig 4a und 4b je eine geschnittene Darstellung einer Trommel einer Trommelschere, wobei sich das Messer in Fig 4a in der Ausgangsposition und in Fig 4b in der Schnittposition befindet;
Fig 5a und 5b je ein Hydraulikschema zur Ansteuerung der Trommelschere.

### Ausführung der Erfindung

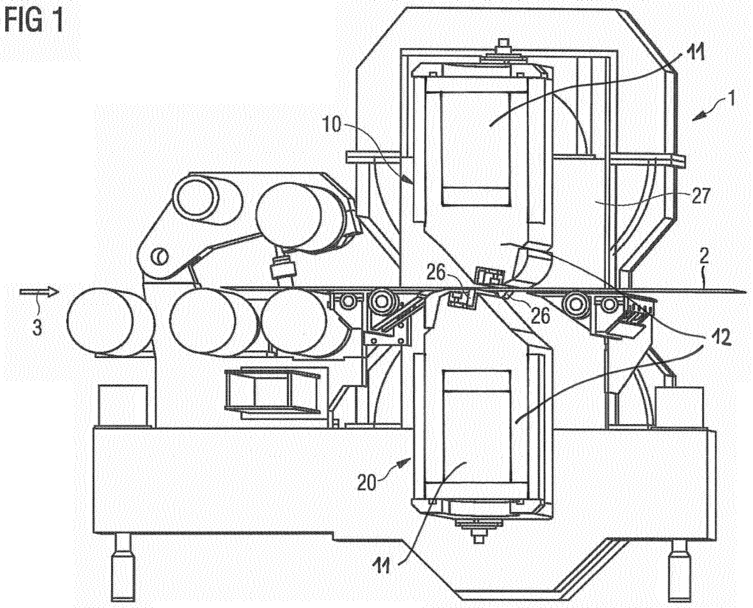

Die Figur 1 zeigt in einer Vorderansicht eine Ausführungsform der erfindungsgemäßen Trommelschere 1. Die Trommelschere 1 dient zum Querteilen von schnell bewegten dünnen Stahlbändern 2. Für die Ausführung des Schnittes wird ein Hub von etwa 70 mm ausgeführt. Die Zweitrommelschere 1 besteht aus einer Obertrommel 10 und einer Untertrommel 20, deren Drehachsen 8 in einem fixen Abstand zueinander im Gestell 27 drehbar gelagert sind. Die beiden Trommeln 10, 20 mit je einem Messer 26 rotieren in entgegen gesetzter Richtung. Das zu schneidende Walzgut 2 wird in Richtung des Pfeils 3 von links zur Trommelschere 1 herangeführt, zu einem gewünschten Zeitpunkt getrennt und in der Darstellung der Figur 1 rechts abgeführt. Die typische Geschwindigkeit des Walzbandes 2 liegt bei 1 - 20 m/s oder darüber. Das Stahlband 2 hat üblicherweise eine Dicke von etwa 0,5 mm bis 5 mm. Ein Messerspalt, der zum Schnittzeitpunkt nicht größer sein soll als 30% der Banddicke, erfordert daher eine sehr präzise Einstellung und Führung der Messer. Unter dem Begriff Messerspalt ist im Folgenden der Abstand der beiden Messer im Schnittzeitpunkt in Parallelstellung der Messerschneiden zu verstehen.

In einem Betriebszustand, in welchem das Stahlband 2 noch nicht geschnitten werden soll, sind die beiden Messer 26 in den Messertrommeln 10, 20 zurückgezogen (Ausgangs- oder Ruheposition) und das Walzgut 2 passiert ungeschnitten den durch die beiden Messerkreise gebildeten Spalt. Die beiden Trommeln 10 und 20 drehen meist oder fortwährend mit einer Messerkreis-Umfangsgeschwindigkeit, die im Wesentlichen gleich groß wie die Bandgeschwindigkeit des durchlaufenden Walzbandes 2 ist. Im hier dargestellten Ausführungsbeispiel der erfindungsgemäßen Hochgeschwindigkeitsschere 1 hat der Messerkreis einen Durchmesser von etwa 1,5 m.

Um das schnell laufende Stahlband 2 zu schneiden, werden die beiden Messer 26 vor einem gewünschten Schnittzeitpunkt während der Rotation der Trommeln 10, 20 aus der zurückgezogenen Ruhestellung in eine Voranstellungs-Position gebracht. Diese Voranstellungs-Position ist so gewählt, dass die Messer möglichst nahe - aber doch mit einem gewissen Sicherheitsabstand, damit keine Oberflächenkratzer entstehen, - an das laufende Metallband 2 herangeführt sind, sodass nach einem gegebenen Schnittbefehl binnen einer Umdrehung die beiden Messer 26 von der Voranstellungs-Position in die Schnittposition ausgefahren werden können. Der eigentliche Abtrennvorgang erfolgt dann durch das Zusammentreffen der vollständig ausgefahrenen Messer 26. Der Vorteil dieses zweistufigen Ausfahrens liegt darin, dass für den eigentlichen Schnittvorgang während einer Umdrehung nur ein kurzer Stellweg von 5 bis 10 mm zurückgelegt werden muss. Anderseits, wenn nicht geschnitten wird, sind die beiden Messer 26 die allermeiste Zeit in der Ausgangs- oder Ruheposition vom durchlaufenden Band weit genug entfernt, um die Bandoberfläche beschädigen zu können.

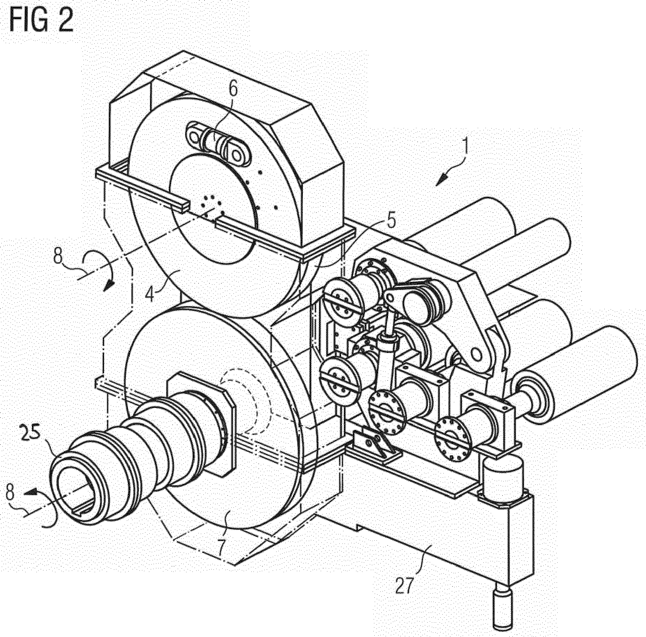

Die Figur 2 zeigt die Hochgeschwindigkeits-Trommelschere der Fig 1 in einer Rückansicht. Beide Messertrommeln 10, 20 werden von einer einzigen Antriebsvorrichtung 31 angetrieben. Diese Antriebsvorrichtung kann je nach benötigter Antriebsleistung aus einem oder aus mehreren Motoren und ggf. einem Getriebe bestehen. Im gezeigten Ausführungsbeispiel ist die Antriebseinheit in Richtung der unteren Drehachse 8 an die untere Trommelwelle 25 angekoppelt. Das unten eingeleitete Drehmoment wird mittels des Zahnrads 7 auf die beiden Zahnräder 4, 5 der oberen Trommelwelle übertragen und in Richtung der oberen Drehachse 8 der Trommelschere 1 zugeführt. Die beiden stirnseitig aneinander liegenden Zahnräder 4, 5 der oberen Drehachse bilden zusammen ein geteiltes Zahnrad, welches zur Einstellung einer Spielfreiheit dient: Hierzu werden die beiden Zahnräder 4, 5 mittels der Spannvorrichtung 6 gegenläufig vorgespannt. In der Kämmung ist dann das Spiel zwischen dem Zahnrad 7 und den Zahnrädern 4, 5 null. Da die Kämmung in keinem Betriebszustand gelöst wird, ist der Verschleiß des Zahnradgetriebes sehr gering. Die Synchronisation zwischen der oberen und der unteren Drehachse ist stets gewährleistet.

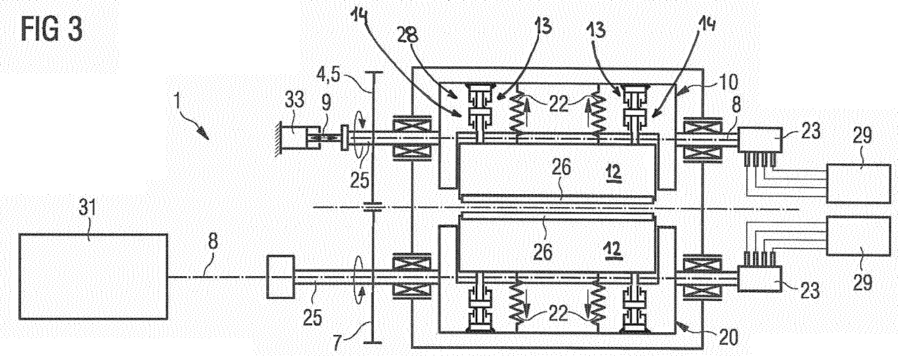

Zur Einstellung des Messerspalts sind die Zahnräder 4,5,7 des Zahnradgetriebes mit jeweils einer Schrägverzahnung versehen. Die Schrägverzahnung zwischen dem unteren Zahnrad 7 und den beiden oberen Zahnrädern 4, 5 ermöglicht eine Einstellung des Messerspalts, indem man eine der beiden Drehachsen axial verschiebt. Im vorliegenden Beispiel wird die obere Achse 8 gemäß Pfeil 9 (siehe Figur 3) axial verschoben. Dies erfolgt durch die axiale Antriebsvorrichtung 33. Die untere Achse 8 ist axial fixiert. Durch die Schrägverzahnung kann dadurch die Winkelposition der Messer zueinander voreilend oder nacheilend eingestellt werden. Von Vorteil ist dabei, dass für die Kopplung von oberer und unterer Trommel Standardgetriebe verwendet werden können.

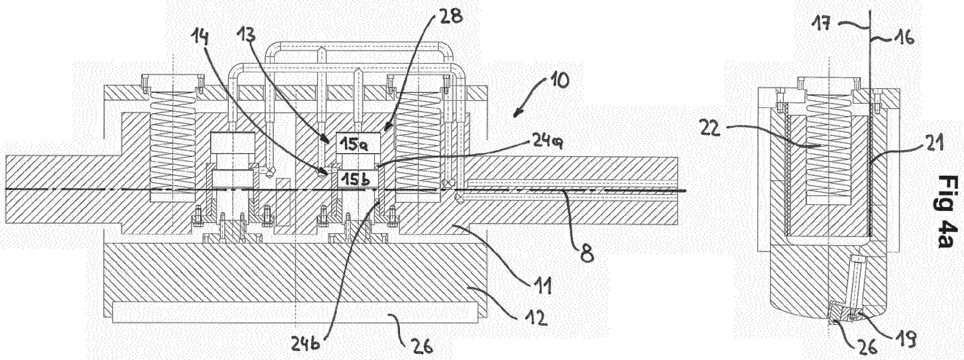

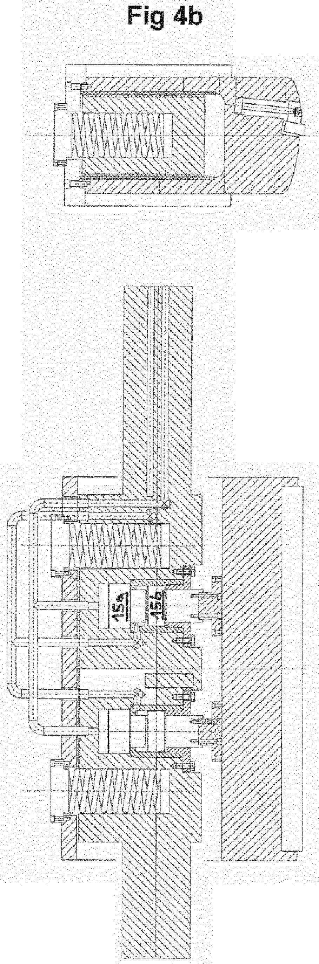

Die Figuren 1, 3 und 4 zeigen die Hochgeschwindigkeits-Trommelschere in schematischen Darstellungen. Wie in den Figuren 1 und 4 gezeigt, besteht jede Trommel 10, 20 im Wesentlichen aus dem ersten Teil 11, welcher in axialer Fortführung die eigentliche Trommelwelle 25 bildet. Um diesen ersten Teil 11 ist gemäß der Erfindung der als Hohlprofil ausgebildete zweite Teil 12, der eigentliche Messerhalter, angeordnet. Das Ausfahren des Messers 26 erfolgt durch zwei Betätigungseinrichtungen 28, die im linken und rechten Randbereich der Trommel 10,20 angeordnet sind, wobei jede Betätigungseinrichtung einen ersten Hydraulikzylinder 13 und einen zweiten Hydraulikzylinder 14 umfasst. Es wäre denkbar, eine, zwei oder mehr Betätigungseinrichtungen pro Messer vorzusehen. Um den Messerhalter 12 und damit das Messer 26 in radialer Richtung aus einer Ausgangs- in eine Voranstellungs-Position zu bringen, werden die beiden ersten Hydraulikzylinder 13 jeder Trommel (siehe Figur 3) durch ein Druckmedium mit Druck beaufschlagt. Das Druckmedium stellt eine nicht näher dargestellte Hydraulikpumpe von außen bereit, wobei die Hydraulikflüssigkeit über an sich bekannte Drehdurchführungen 23 und Schaltventile 29 in die Trommelwelle 25 eingespeist wird. Sie gelangt über Verbindungsleitungen in den Zylinderraum der ersten Hydraulikzylinder 13, wobei die ersten Hydraulikzylinder 13 am ersten Teil 10 befestigt und als Plungerzylinder ausgebildet sind. Um das Messer 26 auszufahren, muss die Federkraft von einem Federelement, das im konkreten Fall zwei Tellerfederpakete 22 aus Stahl umfasst, überwunden werden.

Die beiden Tellerfederpakete 22 dienen dazu, den ersten Teil 11 und den zweiten Teil 12 unabhängig von der Ausfahrposition des Messers 26 stets unter einer gewissen Vorspannung zu halten bzw. das Messer nach dem Schneidevorgang wieder in die Ausgangsposition rückzustellen. Um das Messer von der Voranstellungs-Position in die Schnittposition zu bringen, werden die zwei zweiten Hydraulikzylinder 14 ausgefahren, wobei die zweiten Hydraulikzylinder 14 mit den ersten Hydraulikzylindern 13 verbunden sind. Sowohl der erste und der zweite Hydraulikzylinder 13,14 weisen einen mechanischen Anschlag auf, sodass die Lagen der Voranstellungs-Position und der Schnittposition mechanisch festgelegt sind.

Der rechteckförmige Querschnitt im Inneren des Messerhalters 12 wird durch einen U-förmigen Teil und ein Abschlussstück gebildet. Am Bodenteil ist das Messer 26 mittels einer Messer-Klemmvorrichtung 19 gehalten. Die Messer-Klemmvorrichtung 19 kann beispielsweise mittels Schrauben oder Hydraulikzylinder realisiert sein, was hier nicht näher dargestellt ist. Im quaderförmigen Innen- oder Hohlraum des Messerhalters 12 ist der drehgelagerte erste Teil 11 angeordnet. Ebenso der erste und zweite Hydraulikzylinder 13, 14 zum Ausfahren des Messers. Die radiale Führung zwischen den beiden Teilen 11 und 12 ist als Gleitführung ausgebildet. Einander zugewandte Innenflächen 16 des Hohlprofils 12 bilden Gleitflächen mit korrespondierenden Außenflächen 17 des Wellenteils 11. Der Messerhalter 12 ist dadurch über eine große Führungslänge sehr genau geführt. Die Präzision dieser Radialführung 21 bleibt über eine lange Gebrauchsdauer der Hochgeschwindigkeitsschere 1 erhalten und ermöglicht über einen langen Betriebszeitraum eine präzise Einstellung des Messerspalts. Die erfindungsgemäße Konstruktion ist betriebssicher, mit vergleichsweise nur geringem Verschleiß behaftet und servicefreundlich.

Beim Schneiden des Walzguts 2 wird gemäß Fig 3 wie folgt vorgegangen: Innerhalb von 10 Umdrehungen der Trommeln 10 wird der zweite Teil 12 durch die beiden ersten Hydraulikzylinder 13 der Betätigungseinrichtung 28 von der Ausgangsposition in die Voranstellungs-Position gebracht. Dazu wird ein Hydraulikfluid von einem nicht dargestellten Hydraulikaggregat über ein Schaltventil 29 zur Dreheinführung 23 und von dort zu den ersten Hydraulikzylindern 13 geleitet. Innerhalb der letzten Umdrehung der Trommel 10 vor dem Schnitt, werden die zweiten Hydraulikzylinder 14 von der Voranstellungs-Position zur Schnittposition verfahren, wobei der Hub der ersten Hydraulikzylinder 50 bis 60 mm und der Hub der zweiten Zylinder nur 5 bis 10 mm beträgt. Nach dem Schnitt werden die ersten und zweiten Zylinder 13, 14 mittels der Hydraulikventile 29 drucklos geschaltet, sodass der Messerhalter 12 durch die Tellerfedern 22 in die Ausgangsposition zurückgezogen wird. Es wäre natürlich auch möglich, anstatt der Federelemente 22 doppeltwirkende Hydraulikzylinder 13,14 zu verwenden.

Die vorgenannten Schritte wurden für die Trommel 10 beschrieben. Klarerweise laufen diese für die Trommel 20 in analoger Weise ab.

Die Figur 4a zeigt einen Schnitt durch die Obertrommel 10 einer Trommelschere 1, wobei sich der Messerhalter 12 in der Ausgangsposition befindet. Jede Betätigungseinrichtung 28 weist je einen ersten und einen zweiten Hydraulikzylinder 13, 14 mit jeweils einem Kolben 15a, 15b auf, wobei der zweite Kolben 15b durch die Bewegung des ersten Kolbens 15a verschoben wird. Die ausgefahrene Position des ersten Kolbens 15a wird durch einen ersten Endanschlag 24a begrenzt; in gleicher Weise wird die ausgefahrene Position des zweiten Kolbens 15b durch einen zweiten Endanschlag 24b begrenzt.

Die Figur 4b zeigt die Obertrommel 10 in der Schnittposition, wobei die beiden ersten und beiden zweiten Hydraulikzylinder 13,14 ausgefahren sind.

Nach den Figuren 4a und 4b weisen die ersten und zweiten Hydraulikzylinder 13, 14 eine sogenannte Doppelkolben Anordnung auf. Es wäre natürlich auch möglich, zwei separate Hydraulikzylinder einfach hintereinander anzuordnen.

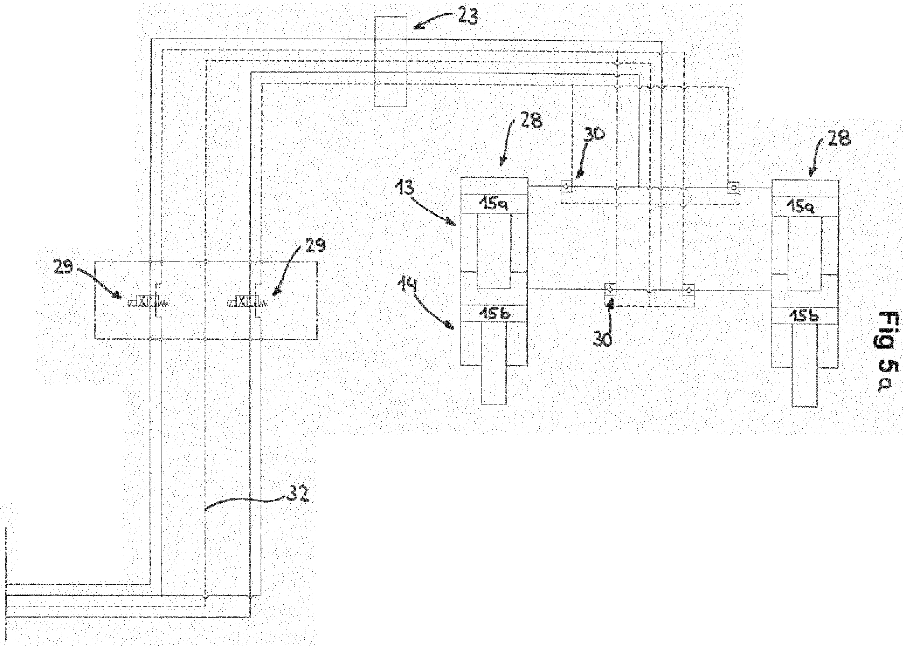

Die Figur 5a zeigt ein erstes Hydraulikschema zur Ansteuerung der ersten und zweiten Hydraulikzylinder 13,14. Das Druckmedium wird von einem Schaltventil 29 über die Drehdurchführung 23 zu den Hydraulikzylindern 13,14 geleitet. Zwischen den Hydraulikventilen 29 und den Hydraulikzylindern ist jeweils eine Sperreinrichtung 30, die als entsperrbares Rückschlagventil ausgebildet ist, angeordnet. Im nichtentsperrten Zustand erlaubt die Sperreinrichtung einen Durchfluss in den Hydraulikzylinder, nicht jedoch aus dem Hydraulikzylinder heraus. Dies hat den Vorteil, dass der hydraulische Druck, der beim Schnitt auf das 2,5 fache des Nenndrucks in den Hydraulikzylindern 13, 14 ansteigt, sicher abgesperrt wird. Nach dem Schnitt werden die Sperreinrichtungen 30 entsperrt, sodass das Fluid aus den Zylindern 13,14 über die Drehdurchführungen 23 und die geöffneten Hydraulikventile 29 zurück zum Tank strömen kann.

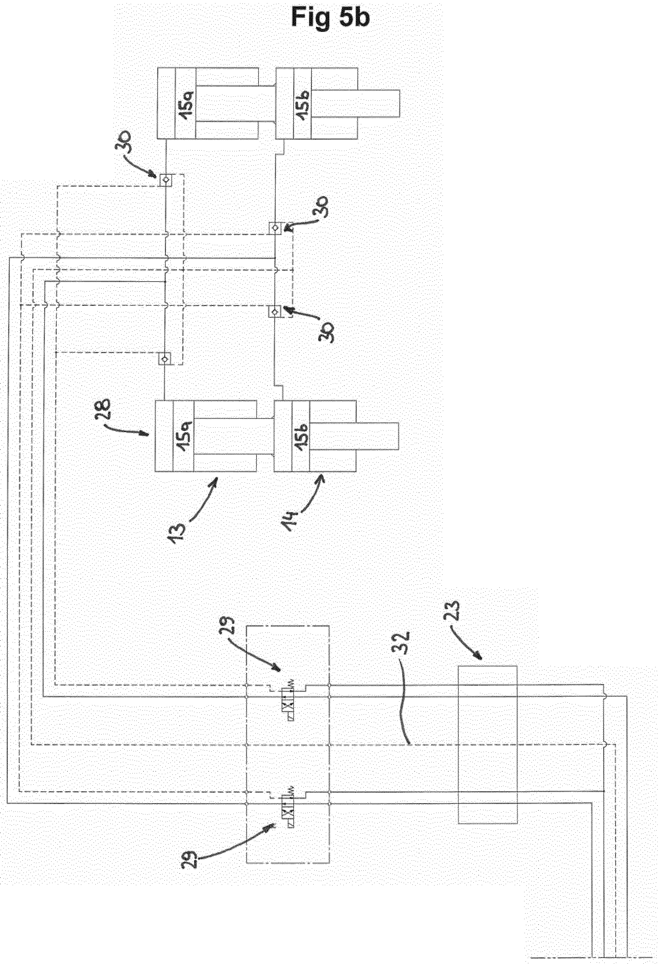

Im Unterschied zu Figur 5a zeigt die Figur 5b eine Variante des Hydraulikschemas, wobei die Hydraulikventile 29 auf der Trommel angeordnet sind. Die ersten und zweiten Hydraulikzylinder 13,14 sind separat ausgebildet und nicht - wie in der Fig 5a - in einer Doppelkolbenanordnung.

### Bezugszeichenliste

- 1: Trommelschere
- 2: Walzgut
- 3: Bewegungsrichtung des Walzguts
- 4: erstes oberes Zahnrad
- 5: zweites oberes Zahnrad
- 6: Spannvorrichtung
- 7: unteres Zahnrad
- 8: Drehachse
- 9: Pfeil
- 10: obere Messertrommel, Obertrommel
- 11: erster Teil
- 12: zweiter Teil, Messerhalter
- 13: erster Hydraulikzylinder
- 14: zweiter Hydraulikzylinder
- 15a: erster Kolben
- 15b: zweiter Kolben
- 16: Innenfläche, Gleitfläche
- 17: Außenfläche, Gleitfläche
- 19: Messer-Klemmvorrichtung
- 20: untere Messertrommel, Untertrommel
- 21: Radialführung
- 22: Tellerfederpaket
- 23: Drehdurchführung
- 24a: erster Endanschlag
- 24b: zweiter Endanschlag
- 25: Trommelwelle
- 26: Messer
- 27: Gestell
- 28: Betätigungseinrichtung
- 29: Hydraulikventil
- 30: Sperreinrichtung
- 31: Antriebsvorrichtung
- 32: Steuerdruck
- 33: axiale Antriebsvorrichtung

## Patentansprüche

1. Trommelschere (1) zum Querteilen von Walzgut (2), umfassend:
- zwei gegenüberliegend angeordnete Trommeln (10, 20), welche mittels einer Antriebsvorrichtung (31) mit einer der Walzgut-Durchlaufgeschwindigkeit entsprechenden Umfangsgeschwindigkeit antreibbar sind,
- wobei jede Trommel (10, 20) einen ersten Teil (11), der um eine Drehachse (8) drehbar gelagert ist, und einen zweiten Teil (12), der ein Messer (26) trägt, aufweist,
- wobei zwischen dem ersten Teil (11) und dem zweiten Teil (12) eine Führung (21) ausgebildet ist, sodass der zweite Teil (12) mittels einer Betätigungseinrichtung (28) zwischen einer Ausgangsposition und einer Schnittposition gleitbeweglich verstellbar ist, **dadurch gekennzeichnet, dass** die Betätigungseinrichtung (28) einen ersten Hydraulikzylinder (13) und einen zweiten Hydraulikzylinder (14) umfasst, wobei der erste Hydraulikzylinder (13) zwischen dem ersten Teil (11) und dem zweiten Hydraulikzylinder (14) und der zweite Hydraulikzylinder (14) zwischen dem ersten Hydraulikzylinder (13) und dem zweiten Teil (12) angeordnet ist.

2. Schere nach Anspruch 1, **dadurch gekennzeichnet, dass** der erste Hydraulikzylinder (13) als ein mehrstufiger Hydraulikzylinder ausgebildet ist.

3. Schere nach einem der Ansprüche 1 bis 2, **dadurch gekennzeichnet, dass** der erste Hydraulikzylinder (13) einen ersten Endanschlag (24a) zur Festlegung einer Voranstellungs-Position aufweist, wobei die Voranstellungs-Position zwischen der Ausgangsposition und der Schnittposition liegt, und dass der zweite Hydraulikzylinder (14) einen zweiten Endanschlag (24b) zur Festlegung der Schnittposition aufweist.

4. Schere nach einem der vorhergehenden Ansprüche, **dadurch gekennzeichnet, dass** ein Federelement (22) zwischen dem ersten Teil (11) und dem zweiten Teil (12) derselben Trommel (10,20) angeordnet ist.

5. Schere nach Anspruch 1, **dadurch gekennzeichnet, dass** die Antriebsvorrichtung (31) über eine Antriebswelle (25) mit einer Trommel (10, 20) verbunden ist, und eine Druckquelle mit einer Drehdurchführung (23), die Drehdurchführung (23) mit der Antriebswelle (25), die Antriebswelle (25) mit einem Hydraulikventil (29), das auf der Trommel (10,20) angeordnet ist, und das Hydraulikventil (29) mit einem Hydraulikzylinder (13,14) strömungstechnisch verbunden ist.

6. Schere nach Anspruch 5, **dadurch gekennzeichnet, dass** das Hydraulikventil (29) am ersten Hydraulikzylinder (13) oder am zweiten Hydraulikzylinder (14) angebaut ist.

7. Schere nach Anspruch 1, **dadurch gekennzeichnet, dass** die Antriebsvorrichtung (31) über eine Antriebswelle (25) mit einer Trommel (10, 20) verbunden ist, und ein Hydraulikventil (29) mit einer Drehdurchführung (23), die Drehdurchführung (23) mit der Antriebswelle (25), und die Antriebswelle (25) mit einem Hydraulikzylinder (13,14) strömungstechnisch verbunden ist.

8. Schere nach einem der Ansprüche 5 bis 7, **dadurch gekennzeichnet, dass** das zwischen dem Hydraulikventil (29) und zumindest einem Hydraulikzylinder (13,14) eine, vorzugsweise entsperrbare, Sperreinrichtung (30) angeordnet ist.

9. Schere nach einem der Ansprüche 5 bis 8, **dadurch gekennzeichnet, dass** eine Steuer- bzw. Regeleinrichtung über eine drahtlose Signalübertragungseinrichtung mit dem Hydraulikventil (29) verbunden ist.

10. Verfahren zum Querteilen von Walzgut (2) mittels einer Trommelschere (1), wobei die Trommelschere (1) zwei Trommeln (10, 20) und jede Trommel zumindest ein Messer (26) umfasst, wobei das Messer (26) von einem ersten Hydraulikzylinder (13) und einem zweiten Hydraulikzylinder (14) verschoben werden kann, umfassend folgende Verfahrensschritte:
- Voranstellen des Messers (26) mittels des ersten Hydraulikzylinders (13) von einer Ausgangsposition in eine Voranstellungs-Position, wobei die Voranstellungs-Position zwischen der Ausgangsposition und einer Schnittposition liegt und das Voranstellen innerhalb von 2 bis 100, bevorzugt 3 bis 20, Umdrehungen der Trommel (10,20) erfolgt;
- Gegenläufiges Rotieren der Trommeln (10,20), wobei die Umfangsgeschwindigkeit der Trommeln (10,20) der Durchlaufgeschwindigkeit des Walzguts (2) entspricht;
- Ausfahren des Messers (26) mittels des zweiten Hydraulikzylinders (14) von der Voranstellungs-Position in die Schnittposition, wobei das Ausfahren innerhalb von < 1 Umdrehung der Trommel (10,20) erfolgt; und
- Querteilen des Walzguts (2).

11. Verfahren nach Anspruch 10, **dadurch gekennzeichnet, dass** nach dem Querteilen des Walzguts (2) die Schritte
- Einfahren des Messers (26) von der Schnittposition in die Voranstellungs-Position, wobei das Einfahren innerhalb von < 1 Umdrehung der Trommel (10,20) erfolgt; und
- Einfahren des Messers (26) von der Voranstellungs-Position in die Ausgangsposition;
durchgeführt werden.

12. Verfahren nach einem der Ansprüche 10 bis 11, **dadurch gekennzeichnet, dass** beim Voranstellen der erste Hydraulikzylinder (13) gegen einen ersten Endanschlag (24a) ausgefahren wird.

13. Verfahren nach einem der Ansprüche 10 bis 12, **dadurch gekennzeichnet, dass** beim Ausfahren der zweite Hydraulikzylinder (14) gegen einen zweiten Endanschlag (24b) ausgefahren wird.

14. Verwendung der Trommelschere (1) nach einem der Ansprüche 1 bis 9 zur Durchführung des Verfahrens nach einem der Ansprüche 10 bis 13.

## Claims

1. Drum shear (1) for cross cutting rolled stock (2), comprising:
- two drums (10, 20) arranged opposite one another, which can be driven by means of a driving device (31) at a peripheral speed corresponding to the throughput speed of the rolled stock,
- wherein each drum (10, 20) has a first part (11), which is mounted so as to be rotatable about an axis of rotation (8), and a second part (12), which carries a blade (26),
- wherein a guide (21) is formed between the first part (11) and the second part (12), enabling the second part (12) to be adjusted in a sliding movement between an initial position and a cutting position by means of an actuating device (28), **characterized in that** the actuating device (28) comprises a first hydraulic cylinder (13) and a second hydraulic cylinder (14), wherein the first hydraulic cylinder (13) is arranged between the first part (11) and the second hydraulic cylinder (14), and the second hydraulic cylinder (14) is arranged between the first hydraulic cylinder (13) and the second part (12).

2. Shear according to Claim 1, **characterized in that** the first hydraulic cylinder (13) is designed as a multi-stage hydraulic cylinder.

3. Shear according to either of Claims 1 and 2, **characterized in that** the first hydraulic cylinder (13) has a first end stop (24a) for the purpose of determining a pre-feed position, the pre-feed position lying between the initial position and the cutting position, and **in that** the second hydraulic cylinder (14) has a second end stop (24b) for the purpose of determining the cutting position.

4. Shear according to one of the preceding claims, **characterized in that** a spring element (22) is arranged between the first part (11) and the second part (12) of the same drum (10, 20).

5. Shear according to Claim 1, **characterized in that** the driving device (31) is connected to one drum (10, 20) by a drive shaft (25), and a pressure source is connected in terms of flow to a rotary union (23), the rotary union (23) is connected in terms of flow to the drive shaft (25), the drive shaft (25) is connected in terms of flow to a hydraulic valve (29), which is arranged on the drum (10, 20), and the hydraulic valve (29) is connected in terms of flow to a hydraulic cylinder (13, 14).

6. Shear according to Claim 5, **characterized in that** the hydraulic valve (29) is mounted on the first hydraulic cylinder (13) or on the second hydraulic cylinder (14).

7. Shear according to Claim 1, **characterized in that** the driving device (31) is connected to one drum (10, 20) by a drive shaft (25), and a hydraulic valve (29) is connected in terms of flow to a rotary union (23), the rotary union (23) is connected in terms of flow to the drive shaft (25), and the drive shaft (25) is connected in terms of flow to a hydraulic cylinder (13, 14).

8. Shear according to one of Claims 5 to 7, **characterized in that** a, preferably releasable, blocking device (30) is arranged between the hydraulic valve (29) and at least one hydraulic cylinder (13, 14).

9. Shear according to one of Claims 5 to 8, **characterized in that** an open-loop and/or closed-loop control device is connected to the hydraulic valve (29) by a wireless signal transmission device.

10. Method for cross cutting rolled stock (2) by means of a drum shear (1), wherein the drum shear (1) comprises two drums (10, 20), and each drum comprises at least one blade (26), wherein the blade (26) can be moved by a first hydraulic cylinder (13) and a second hydraulic cylinder (14), comprising the following method steps:
- pre-feeding the blade (26) from an initial position to a pre-feed position by means of the first hydraulic cylinder (13), wherein the pre-feed position lies between the initial position and a cutting position and pre-feeding is accomplished within 2 to 100, preferably 3 to 20, revolutions of the drum (10, 20);
- opposed rotation of the drums (10, 20), wherein the peripheral speed of the drums (10, 20) corresponds to the throughput speed of the rolled stock (2);
- extension of the blade (26) from the pre-feed position to the cutting position by means of the second hydraulic cylinder (14), wherein extension is accomplished within < 1 revolution of the drum (10, 20); and
- cross cutting of the rolled stock (2).

11. Method according to Claim 10, **characterized in that** the following steps:
- retraction of the blade (26) from the cutting position to the pre-feed position, wherein retraction is accomplished within < 1 revolution of the drum (10, 20); and
- retraction of the blade (26) from the pre-feed position to the initial position;
are carried out after the cross cutting of the rolled stock (2).

12. Method according to either of Claims 10 and 11, **characterized in that**, during pre-feeding, the first hydraulic cylinder (13) is extended against a first end stop (24a).

13. Method according to one of Claims 10 to 12, **characterized in that**, during extension, the second hydraulic cylinder (14) is extended against a second end stop (24b).

14. Use of the drum shear (1) according to one of Claims 1 to 9 for carrying out the method according to one of Claims 10 to 13.

## Revendications

1. Cisaille à tambour (1) destinée à la découpe transversale d'une matière laminée (2), comprenant :
- deux tambours (10, 20) disposés de manière opposée, lesquels peuvent être entraînés au moyen d'un dispositif d'entraînement (31) avec une vitesse périphérique correspondant à la vitesse de traversée de la matière laminée,
- chaque tambour (10, 20) présentant une première pièce (11), qui est montée de manière à pouvoir tourner autour d'un axe de rotation (8), et une deuxième pièce (12), qui porte une lame (26),
- un guide (21) étant configuré entre la première pièce (11) et la deuxième pièce (12) de sorte que la deuxième pièce (12) est ajustable par un mouvement coulissant au moyen d'un dispositif d'actionnement (28) entre une position de départ et une position de découpe, **caractérisée en ce que** le dispositif d'actionnement (28) comprend un premier vérin hydraulique (13) et un deuxième vérin hydraulique (14), le premier vérin hydraulique (13) étant disposé entre la première pièce (11) et le deuxième vérin hydraulique (14) et le deuxième vérin hydraulique (14) étant disposé entre le premier vérin hydraulique (13) et la deuxième pièce (12).

2. Cisaille selon la revendication 1, **caractérisée en ce que** le premier vérin hydraulique (13) est configuré en tant que vérin hydraulique à plusieurs étages.

3. Cisaille selon l'une des revendications 1 à 2, **caractérisée en ce que** le premier vérin hydraulique (13) présente une première butée d'extrémité (24a) destinée à la détermination d'une position de préfixation, la position de préfixation se situant entre la position de départ et la position de découpe, et **en ce que** le deuxième vérin hydraulique (14) présente une deuxième butée d'extrémité (24b) destinée à la détermination d'une position de découpe.

4. Cisaille selon l'une des revendications précédentes, **caractérisée en ce qu'**un élément à effet ressort (22) est disposé entre la première pièce (11) et la deuxième pièce (12) du même tambour (10, 20).

5. Cisaille selon la revendication 1, **caractérisée en ce que** le dispositif d'entraînement (31) est relié par le biais d'un arbre d'entraînement (25) à un tambour (10, 20), et une source de pression est reliée à un passage tournant (23), le passage tournant (23) est relié à l'arbre d'entraînement (25), l'arbre d'entraînement (25) est relié à une soupape hydraulique (29), qui est disposée sur le tambour (10, 20), et la soupape hydraulique (29) est reliée à un vérin hydraulique (13, 14) selon la technique des fluides.

6. Cisaille selon la revendication 5, **caractérisée en ce que** la soupape hydraulique (29) est ajoutée au niveau du premier vérin hydraulique (13) ou au niveau du deuxième vérin hydraulique (14).

7. Cisaille selon la revendication 1, **caractérisée en ce que** le dispositif d'entraînement (31) est relié au tambour (10, 20) par le biais d'un arbre d'entraînement (25), et une soupape hydraulique (29) est reliée à un passage tournant (23), le passage tournant (23) est relié à l'arbre d'entraînement (25) et l'arbre d'entraînement (25) est relié à un vérin hydraulique (13, 14) selon la technique des fluides.

8. Cisaille selon l'une des revendications 5 à 7, **caractérisée en ce que**, entre la soupape hydraulique (29) et au moins un vérin hydraulique (13, 14), un dispositif de blocage (30), de préférence déblocable, est disposé.

9. Cisaille selon l'une des revendications 5 à 8, **caractérisée en ce qu'**un dispositif de commande resp. de régulation est relié par le biais d'un dispositif de transmission de signaux sans fil à la soupape hydraulique (29).

10. Procédé destiné à la découpe transversale d'une matière laminée (2) au moyen d'une cisaille à tambour (1), la cisaille à tambour (1) comprenant deux tambours (10, 20) et chaque tambour comprenant une lame (26), la lame (26) pouvant être déplacée par un premier vérin hydraulique (13) et un deuxième vérin hydraulique (14), comprenant les étapes de procédé suivantes :
- la préfixation de la lame (26) au moyen du premier vérin hydraulique (13) d'une position de départ à une position de préfixation, la position de préfixation se situant entre la position de départ et une position de découpe et la préfixation s'effectuant en l'espace de 2 à 100, de préférence de 3 à 20, rotations du tambour (10, 20) ;
- la rotation des tambours (10, 20) dans des directions opposées, la vitesse périphérique des tambours (10, 20) correspondant à la vitesse de traversée de la matière laminée (2) ;
- la sortie de la lame (26) au moyen du deuxième vérin hydraulique (14) de la position de préfixation à la position de découpe, la sortie s'effectuant en l'espace de moins de 1 rotation du tambour (10, 20) ; et
- la découpe transversale de la matière laminée (2).

11. Procédé selon la revendication 10, **caractérisé en ce que**, à l'issue de la découpe transversale de la matière laminée (2), les étapes
- de retour de la lame (26) de la position de découpe à la position de préfixation, le retour s'effectuant en l'espace de moins de 1 rotation du tambour (10, 20) ; et
- de retour de la lame (26) de la position de préfixation à la position de départ
sont réalisées.

12. Procédé selon l'une des revendications 10 à 11, **caractérisé en ce que** lors de la préfixation le premier vérin hydraulique (13) sort et vient percuter une première butée d'extrémité (24a).

13. Procédé selon l'une des revendications 10 à 12, **caractérisé en ce que** lors de la sortie le deuxième vérin hydraulique (14) sort et vient percuter une deuxième butée d'extrémité (24b).

14. Utilisation de la cisaille à tambour (1) selon l'une des revendications 1 à 9 pour la réalisation du procédé selon l'une des revendications 10 à 13.
